# EUROPÄISCHE PATENTSCHRIFT

(11) **EP 2 421 778 B1**
(45) Veröffentlichungstag und Bekanntmachung des Hinweises auf die Patenterteilung: **13.11.2013**
(21) Anmeldenummer: 10717843.6
(22) Anmeldetag: 23.04.2010
(51) Int. Cl.: B65G 47/51, B65G 47/57

(54) **PRODUKTEUMVERTEILVORRICHTUNG**
PRODUCT REDISTRIBUTION DEVICE
DISPOSITIF DE REDISTRIBUTION DE PRODUITS

(30) Priorität: 23.04.2009 CH 643092009
(43) Veröffentlichungstag der Anmeldung: 29.02.2012
(73) Patentinhaber: Rotzinger AG, 4303 Kaiseraugst (CH)
(72) Erfinder: PHILIPP, Kurt, 79639 Grenzach-Wyhlen (DE)
(74) Vertreter: Braun, André jr.
(86) Internationale Anmeldenummer: PCT/IB2010/051789
(87) Internationale Veröffentlichungsnummer: WO 2010/122523

(56) Entgegenhaltungen:
- EP-A1- 0 534 902
- EP-A1- 0 569 788

## Beschreibung

Die vorliegende Erfindung betrifft eine Produkteumverteilvorrichtung gemäss dem Oberbegriff der unabhängigen Patentansprüche 1 und 5 sowie ein entsprechendes Verfahren. Ein solche Produkteumverteilvorrichtung ist aus der Druckschrift EP 0 569 788 A1 bekannt.

### Beschreibung

Aus dem Stand der Technik sind Vorrichtungen zum Umverteilen von Produkten bekannt. Beispielsweise bezieht sich die Druckschrift EP 0534902 A1 auf ein Verfahren zum Zuführen von Produkten in einen Speicher und eine nach diesem Verfahren arbeitende Speicherzufuhr-Einrichtung, welche eine erhöhte Ladegeschwindigkeit der Produkte ermöglichen.

Ein Nachteil dieser Vorrichtung besteht jedoch darin, dass sämtliche Produkte den Speicher durchlaufen müssen, bevor sie einer Verpackungsmaschine zugeführt werden können. Es ist somit vorausgesetzt, dass der Speicher zuerst einen gewissen Grundstock an Produkten enthalten muss, bevor diese wieder ausgeschoben werden können. Nachteilig wirkt sich auch aus, dass bei diesem Vorgehen Zeit verloren geht, bis die Produkte durch den Speicher hindurch transportiert, ausgegeben und der Verpackungsmaschine zugeführt sind. Zudem besteht ein Nachteil darin, dass beim Anhalten der Produktion der Speicher noch während einer längeren Zeit entleert werden muss. Als Nachteil hat sich zudem herausgestellt, dass der Produktionstakt und der Takt der Verpackungsmaschine, welche üblicherweise unterschiedlich sind, nur bei geringen Produktionsraten bzw. geringer Produktionsgeschwindigkeit synchronisiert werden können.

Es ist daher Aufgabe der vorliegenden Erfindung, eine Vorrichtung sowie ein entsprechendes Verfahren zur Umverteilung und Entkoppelung von aus kontinuierlicher Produktion gelangenden Produkten bereitzustellen, wobei die Produkte bspw. einer Verpackungsstation und/oder einer Speichereinrichtung zuführbar sind. Insbesondere soll eine kontinuierliche lückenlose Förderung von Produkten zu einer Verpackungsmaschine gewährleistet werden. Durch die Erfindung soll der Durchlauf der Produkte optimiert werden.

Die Ziele der Erfindung werden erreicht durch eine Produkteumverteilvorrichtung mit den Merkmalen von Anspruch 1 oder 5 und mit dem Verfahren des Anspruchs 9. Die zwischen einer Produktionsstation und einer Verpackungsstation vorhandene Produkteumverteilvorrichtung ist erfindungsgemäss zum Umverteilen von Produkten auf mehrere Ablageebenen, Tablare, Förderer etc. ausgebildet, um insbesondere der Verpackungsstation Produkte in einem lückenlosen Strom oder Fluss zuführen zu können.

Ein Vorteil der Erfindung besteht darin, dass Produkte, welche vorzugsweise in Reihen auf dem Hauptförderer transportiert werden, alternativ oder zusätzlich zur üblichen Einspeicherung in die Speichereinheit, auch auf die Entkopplungseinheit bzw. -einrichtung übergeben werden. Die Entkopplungseinheit kann bspw. als Tot- bzw. Abstellplatte realisiert sein, so dass die Produkte für eine bestimmte Wartezeit zwischengelagert werden. Die Reihen werden dann mittels eines an einem Band umlaufenden Abschiebers oder Schiebemittels auf das Queraustrageband bzw. den Austrageförderer geschoben, um dann mittels mindestens einem diesem nachgeordneten Förderer, bspw. sog. Lückenschliessband, einer Verpackungsmaschine kontinuierlich und lückenlos zuzuführen. Sobald der Abschiebevorgang durch den Abschieber bzw. Ausschieber erfolgt ist, kann die auf dem Hauptförderer nachfolgende Reihe von Produkten wieder von der Bandnase bzw. Abgabeort des Hauptförderers auf die als Warteplatz dienende Abstellplatte beschickt werden. Werden mehr Produktreihen auf dem Hauptförderer angeliefert, als die Verpackungsmaschine verpacken kann, so werden die überzähligen Reihen von der Bandnase bzw. vom Abgabeort des Hauptförderers auf einen vertikal verschiebbare und/oder schwenkbare Beschickungsband bzw. den Beschickungsförderer übergeben. Mit diesem verschiebbaren bzw. schwenkbaren Förderer oder Band kann das jeweils nächste freie Tablar einer Gondel aus einer Vielzahl von Tablaren oder Ablageflächen der Speichereinheit mit einer Produktreihe beladen werden. Bei höheren Produktionsleistungen und/oder bei einem Stopp der Verpackungsmaschine müssen alle Produktreihen in die Speichereinheit zwischengespeichert werden. Hierfür bewegt sich die Bandnase bzw. Abgabeort des Hauptförderers und der Eingabeort des Beschickungsförderers vorzugsweise im Gleichtakt, vertikal synchronisiert zur konstant aufwärts bewegten Kette der Speichereinheit, an welcher die mit Ablageflächen ausgebildeten Gondeln transportiert werden. Immer wenn eine Produktreihe auf ein Gondeltablar bzw. eine Ablagefläche beladen worden ist, bewegen sich die Bandnase des Hauptförderers und der Beschickungsförderer vertikal nach unten zum jeweils nächsten freien Gondeltablar. Sie bewegen sich solange vertikal synchronisiert mit der Kette der Speichereinheit nach oben, bis eine Produktreihe in das freie Produkteträgertablar bzw. Gondeltablar beladen worden ist. Auf dem Hauptförderer werden bspw. pro Minute 30 üblicherweise gleichmässig zueinander beabstandete Produktereihen von der Produkte produzierenden Produktionsstation kommend transportiert. Diese Taktrate ist mit derjenigen der Verpackungsstation synchron, wenn bspw. 15 Produktereihen pro Minute vom Hauptförderer an die Entkopplungseinheit und von dieser an den Austrageförderer übergeben werden können. Hat die Verpackungsstation jedoch einen anderen Verarbeitungstakt, so sind die Taktraten zueinander asynchron. Daraus folgt, dass Produktereihen nur dann an den Austrageförderer übertragbar sind, wenn dieser frei und zur Aufnahme einer ganzen Produktereihe bereit ist. Produktereihen, welche nicht über die Entkopplungseinrichtung dem Austrageförderer zugeführt werden, werden alternativ vom Hauptfördermittel via den Beschickungsförderer an den Speicher übertragen. Ist der Fluss an Produktreihen von der Produktion herkommend lückenhaft, so kann alternativ mittels dem Schiebemittel der Entkopplungseinheit eine Produktreihe zum optimalen Zeitpunkt auf das dann freie Queraustrageband, bzw. den Austrageförderer, ausgeschoben werden. Somit ist es möglich die Verpackungsmaschine trotz des lückenhaften Produktflusses kontinuierlich lückenlos mit Produkten zu versorgen. Kommen von der Produktion her keine Reihen von Produkten mehr, so kann die Verpackungsmaschine alternativ aus dem Speicher beschickt werden, in dem eine entsprechende Anzahl von Produkten mittels einem Ausschieber bzw. Schiebemittel der Speichereinheit auf den Austrageförderer ausgeschoben werden. Dies führt nach und nach zu einer Entleerung des Speichers.

Ein Vorteil dieser Produkteumverteilvorrichtung ist der integrierte Warteplatz für eine Produktreihe. Damit wird eine kurzzeitige Unabhängigkeit vom Produktionsfluss erreicht, so dass nicht erst auf die nächste Reihe von Produkten gewartet werden muss, um den Austrageförderer mit Produkten zu beschicken.

Ein weiterer Vorteil der Produkteumverteilvorrichtung ist, dass auch bei höchsten Produktionsleistungen die erforderlichen Reihen von Produkten zur Beschickung der Verpackungsmaschine zugeteilt werden können. Produktereihen, welche nicht der Verpackungsmaschine zugeführt werden können, werden umverteilt und der Speichereinheit zugeführt.

In einer Ausführungsvariante der Erfindung sind der Eingabeort und der Abgabeort der Speichereinrichtung der Produkteumverteilvorrichtung übereinander angeordnet. Einer der Vorteile dieser Ausführungsvariante besteht darin, dass Eingabeort und Abgabeort der Speichereinrichtung dadurch auf derselben Seite des Speichers angeordnet sind, so dass eine kompakte Bauweise der Produkteumverteilvorrichtung realisiert ist. Insbesondere ist dabei vorteilhaft, dass der Austrageförderer der Produkteumverteilvorrichtung Produkte sowohl aus dem Speicher, als auch direkt aus der Produktionslinie heraus aufnehmen an eine Verpackungsstation fördern kann.

In einer Ausführungsvariante der Erfindung umfasst die Entkopplungseinrichtung der Produkteumverteilvorrichtung einen Entkopplungsförderer zum vorübergehenden Aufnehmen und Fördern von Produkten zwischen dem Eingabeort und dem Abgabeort, wobei die Entkopplungseinrichtung Schiebemittel mit mindestens einem Mitnehmer umfasst, mittels welchem die auf dem Entkopplungsförderer aufgenommenen Produkte auf den Austrageförderer ausschiebbar sind. Einer der Vorteile dieser Ausführungsvariante der Erfindung besteht darin, dass eine Reihe von Produkten vorübergehend auf dem Entkopplungsförderer zwischengelagert bzw. abgestellt werden kann. Sobald der Austrageförderer wieder genügend Platz zur Aufnahme einer neuen Reihe von Produkten hat, wird der Entkopplungsförderer beschleunigt und die Reihe auf den Austrageförderer geschoben. Zwecks Ausrichtung der Produkte in der Reihe und der Unterstützung des Vortriebs der Reihe auf dem Entkopplungsförderer, wird mittels eines Schiebemittels, welches bspw. als Schubleiste realisiert ist, die Reihe auf den Austrageförderer geschoben. Ein Vorteil dieser Ausführungsvariante besteht in der schonenden und gleichzeitig effizienten Förderung von Produkten. Des Weiteren wird gewährleistet, dass mittels des Schiebemittels Produkte auch dann auf den Austrageförderer geschoben werden, wenn der Entkopplungsförderer als schlichte Platte oder Ablageebene realisiert ist.

In einer anderen Ausführungsvariante der Erfindung gemäss Anspruch 1 ist der Beschickungsförderer der Produkteumverteilvorrichtung im Bereich des Eingabeorts um eine Schwenkachse herum schwenkbar, wobei der Abgabeort des Beschickungsförderers zur Umverteilung von Produkten am Eingabeort einer entsprechenden Ablageebene der Speichereinheit in einer von mehreren Übergabepositionen positioniert ist. Einer der Vorteile dieser Ausführungsvariante der Erfindung besteht darin, dass die Bandnase bzw. der Abgabeort des Hauptförderers in einer vorbestimmten Übergabeposition örtlich feststehend positionierbar ist, während der Beschickungsförderer durch Schwenkung des Abgabeorts mehrere Übergabepositionen einnehmen kann, um somit die Produkte an die entsprechenden Ablageflächen oder Tablare der Speichereinheit zu übertragen. Zudem ist es möglich, dass der Beschickungsförderer der Bewegung der Förderkette bzw. eines entsprechenden Tablars der Speichereinheit nachgeführt werden kann. Der Beschickungsförderer hat zudem eine vorübergehende Zwischenspeicherwirkung für wenigstens eine Reihe von Produkten.

In einer weiteren Ausführungsvariante der Erfindung gemäss Anspruch 1 ist der Beschickungsförderer der Produkteumverteilvorrichtung höhenverstellbar ausgebildet und der Abgabeort des Beschickungsförderers zur Umverteilung von Produkten an den Eingabeort einer entsprechenden Ablageebene der Speichereinheit in einer der mehreren Übergabe- bzw. Beschickungspositionen positioniert, wobei der Eingabeort des Beschickungsförderers entsprechend in einer von mehreren Übergabepositionen mit dem Abgabeort des Hauptförderers positioniert ist. Einer der Vorteile dieser Ausführungsvariante der Erfindung besteht darin, dass die vom Hauptförderer durch den vertikal bewegbaren Beschickungsförderer übernommenen Produkte dem Speicher in mehreren Positionen zuführbar sind, selbst dann, wenn bspw. wegen besonderen Raumverhältnissen ein Schwenkantrieb für den Beschickungsförderer nicht realisierbar ist. Bei grosszügigeren Platzverhältnissen können dadurch gleichwohl mehrere Ablageflächen von einer oder von benachbarten zwei Gondeln des Speichers effizient mit Produkten beschickt werden.

Einer der Vorteile der Erfindung gemäss Anspruch 5 besteht darin, dass bspw. bei der Herstellung von kleinen Produkten und/oder bei kleineren Herstellungs-Taktraten auf einen Beschickungsförderer als spezifische Einheit verzichtet werden kann. Bei kleinen Produkten, bspw. Biscuits oder kleinen quadratischen Schokoladetafeln, ist der Beschickungsförderer ein Bestandteil des Hauptförderers. In anderen Worten wird der Hauptförderer funktional um die Merkmale des Beschickungsförderers ergänzt. Der Hauptförderer der Produkteumverteilvorrichtung ist somit mit dem Beschickungsförderer dauerhaft verbunden. Um die Bandnase bzw. Abgabeort des Hauptförderers sowohl bei der Entkopplungseinrichtung als auch den Eingabeorten des Speichers positionieren zu können, ist der schwenkbare Hauptförderer zudem längenverstellbar ausgebildet. Mittels der beweglichen Bandnase des Hauptförderers sind alternativ oder zusätzlich allfällige minderwertige Produktereihen auf das Hilfsfördermittel ausschleusbar. Der Hauptförderer ist dazu schwenkbar und längenverstellbar ausgebildet, um in allen erforderlichen Übergabepositionen, bzw. Entkopplungsposition, Beschickungsposition und/oder Hilfsposition, positionierbar zu sein.

In einer anderen Ausführungsvariante der Erfindung umfasst die Produkteumverteilvorrichtung einen quer zur Hauptförderrichtung angeordneten Hilfsförderer zum Fördern von Produkten, wobei der Abgabeort des Hauptförderers in einer weiteren Übergabeposition zur Umverteilung von Produkten an den Hilfsförderer positioniert ist. Einer der Vorteile der Erfindung besteht darin, dass der Auswurf schlechter Produktreihen auch bei höchsten Produktionsleistungen erfolgen kann, da die Bandnase nur um eine Produktlänge zurückgezogen werden muss, während die eigentliche Beschickung des Speichers durch den Beschickungsförderer erfolgt.

Im Folgenden wird die Erfindung anhand der in den Zeichnungen dargestellten Ausführungsbeispielen näher erläutert. Hierbei gehen aus den Zeichnungen und ihrer Beschreibung weitere wesentliche Merkmale und Vorteile der Erfindung hervor.
Fig. 1 zeigt eine schematische Seitenansicht der erfindungsgemässen Produkteumverteilvorrichtung;
Fig. 2 zeigt eine schematische Aufsicht der Produkteumverteilvorrichtung;
Fig. 3 zeigt ein Detail der Produkteumverteilvorrichtung aus Fig. 1.;
Fig. 4 zeigt eine Ausführungsvariante der Produkteumverteilvorrichtung in einer schematischen Darstellung;
Fig. 5 zeigt eine weitere Ausführungsvariante der Produkteumverteilvorrichtung in einer schematischen Darstellung und
Fig. 6 zeigt eine schematische, blockweise Darstellung der Produkteumverteilvorrichtung.

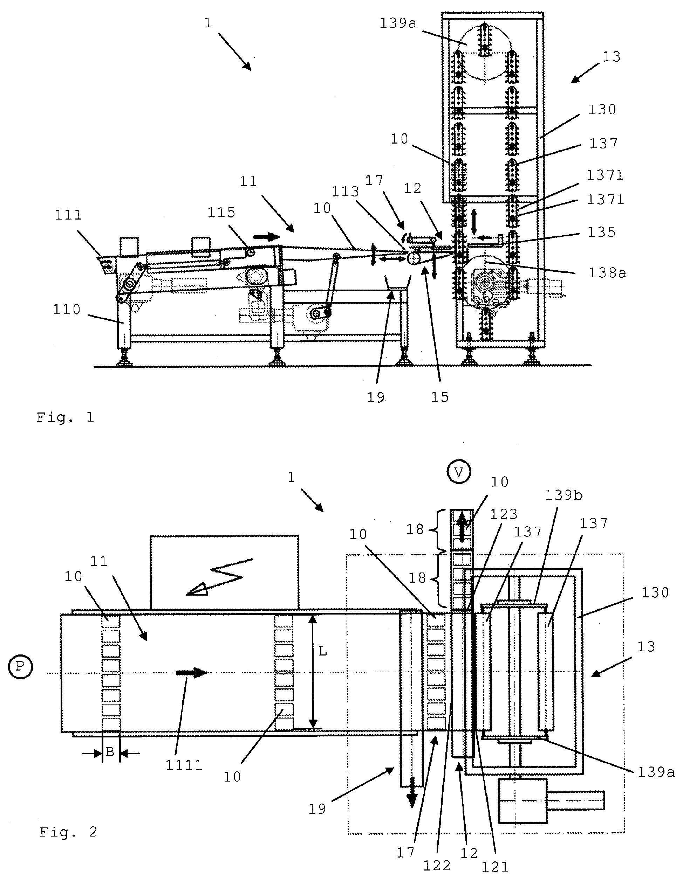

Die Figur 1 illustriert eine mit dem Bezugszeichen 1 bezeichnete erfindungsgemässe Produkteumverteilvorrichtung. Die Produkteumverteilvorrichtung 1 weist einen schwenkbar gelagerten Hauptförderer 11 zum Fördern von Produkten 10 in einer Hauptförderrichtung 1111 zwischen einem Eingabeort 111 und einem Abgabeort 113 auf. Der Eingabeort 111 kann auch als Eingabekante, Eingang, Aufgabeort, Übergabekante oder dergleichen bezeichnet werden. Unter Eingabeort 111 wird die Kante des Förderbands in der gesamten Breite verstanden, bei welcher die Produkte in Reihen von einer vorangehenden Produktionsanlage, welche in Figur 1 nicht dargestellt ist, übernommen werden. Die Schwenkachse 115 verläuft quer, annähernd rechtwinklig, zur Hauptförderrichtung 1111. Die Schwenkachse 115 ist vorzugsweise ungefähr auf halber Strecke zwischen Eingabeort 111 und Abgabeort 113 angeordnet. Die Schwenkachse kann aber auch beim Eingabeort 111 vorgesehen sein. Der Abgabeort 113 des Hauptförderers 11 wird auch als Ausgabeort, Ausgang, Bandnase oder ähnlichem bezeichnet. Das Hauptfördermittel 11 ist üblicherweise als endloser Gurt- oder Bandförderer ausgeführt. Der Bandförderer kann zudem längenverstellbar ausgebildet sein, so dass die Bandnase rückziehbar ist. Der Antrieb eines Bandförderers wird üblicherweise über Servomotoren realisiert, welche mittels einer Steuerung oder Regelung steuerbar bzw. regelbar sind. Beim Hauptförderer 11 sind üblicherweise diverse Detektions- bzw. Sensormittel angeordnet, um bspw. die genaue Position von Produkten festzustellen, um Metallrückstände in Produkten zu ermitteln oder dergleichen mehr. Des Weiteren sind Antriebsmittel für die Schwenkung des Hauptförderers 11 bereitgestellt. Es ist eine stufenlose Schwenkung realisierbar. Verschiedene Schwenkpositionen können bspw. mittels Steuerung des Schwenkantriebs realisiert werden. Der Hauptförderer ist in einer Rahmenkonstruktion 110, meist eine metallische Konstruktion, verbaut. Die Figur 1 illustriert zudem einen Austrageförderer 12, eine Speichereinrichtung 13, einen Beschickungsförderer 15, eine Entkopplungseinrichtung 17 sowie einen Hilfsförderer 19, welcher auch als Ausschleusband o.ä. bezeichnet wird. Die Speichereinheit 13, welche u.a. auch als Warenspeicher, Stückgutspeicher, Zwischenspeicher, Gondelspeicher oder Speicher bezeichnet wird, ist hier als First-in Last-out Speicher dargestellt, mit einem Paar von Ketten, wobei jede Kette um mindestens zwei Kettenräder 138,139 umlaufend angeordnet ist. Die parallel zueinander laufenden Ketten, wobei hier nur eine Kette von der Seite her dargestellt ist, weist Mitnehmer auf, an welchen Gondeln lösbar angeordnet sind. Die Gondeln 137 weisen mehrere Tablare oder Ablageflächen 1371 auf, auf welchen die Produkte 10 abgelegt werden. Die Kettenräder sind in der Rahmenkonstruktion 130, meist eine metallische Konstruktion, verbaut. Mindestens ein Kettenrad ist mittels Antriebsmitteln, vorzugsweise einem Servomotor mit Getriebe, angetrieben und mittels Steuermitteln steuerbar. Die Gondeln werden üblicherweise taktweise transportiert, also in kleinen Schritten, meist um einen Tablarabstand. Als Tablarabstand wird der Abstand zwischen zwei Ablageflächen von Gondeln bezeichnet. Der Antrieb kann aber auch kontinuierlich und stufenlos erfolgen. Der kontinuierliche und der taktweise Antrieb können kombiniert werden, so dass ein abwechslungsweise kontinuierlicher oder taktweiser Antrieb gewährleistet ist. Die Ausgabe und die Eingabe der Produkte aus bzw. in den Speicher 13 erfolgt wie illustriert auf derselben Seite des Speichers. Vorliegend ist die Ausgabe über dem mindestens einen Eingabeort angeordnet. Wesentlich für die vorliegende Erfindung ist, dass ein Speicher 13 einen Transportpfad aufweist, bei welchem wie dargestellt, die Tablare 1371 der Gondeln 137 annähernd vertikal verlaufenden am Beschickungsförderer 15 sowie am Austrageförderer 12 vorbeigeführt werden. Figur 1 illustriert zudem ein Schiebemittel 135 zum Ausschieben der Produkte 10 aus dem Speicher 13 auf das Austrageband bzw. den Austrageförderer 12. Das Schiebemittel kann bspw. als längliche Schiebestange oder -leiste ausgebildet sein, die sich mindestens um die Länge L erstreckt. Sie wird durch entsprechende Antriebsmittel, welche hier nicht dargestellt sind, vor- und rückwärts bewegt. Die Bewegung wird durch Steuerungsmittel des entsprechenden Antriebs gesteuert. Die Ausschiebebewegung wird abgestimmt auf das Vorhandensein von Reihen von Produkten auf dem Austrageförderer 12 bzw. auf der Entkopplungseinrichtung 17. Es soll erreicht werden, dass der Austrageförderer 12 kontinuierlich mit Produkten 10 befüllt ist, so dass die auszutragenden bzw. weg zu transportierenden Produkte 10 einer nicht dargestellten Verpackungsmaschine fortlaufend und vorzugsweise unterbrechungsfrei zugeführt werden können. Die Entkopplungseinrichtung 17 umfasst ein Fördermittel 170, welches als endlos umlaufendes Band realisiert ist. Anstelle des endlos umlaufenden Bands kann auch eine Ablagefläche vorhanden sein. Die auf der Abstell- bzw. Ablagefläche oder dem Förderer zwischengelagerten Produkte 10 werden durch Schiebemittel 177,1771 der Entkopplungseinrichtung 17 zu gegebener Zeit auf den Austrageförderer 12 verschoben. In der Zwischenzeit sind die Produkte "wartend" auf dieser Ablage positioniert. Wird ein Abgabeort mit einem Eingabeort verbunden, so ist unter "verbunden" zu verstehen, dass der Abgabeort eines Förderers, bspw. die Bandnase, mit einem Eingabeort eines anderen Förderers oder einer Ablage vorzugsweise auf gleicher Höhe vorübergehend berührungslos verbunden werden. Dadurch soll ein Übergang realisiert werden, der für die Produkte 10 möglichst schonend ausgebildet ist. Die Verbindung der beteiligten Bänder oder Ablageflächen ist daher in der Regel mechanisch nicht gekoppelt, so dass Bänder und/oder Ablagen zueinander jederzeit bewegbar bleiben. Dies trifft insbesondere dann zu, wenn eine Ablagefläche, bspw. eine Ablagefläche 1371 einer Gondel 137 eines Speichers 13, sich in Bewegung befindet und dabei mit Produkten 10 beladen wird.

Insbesondere betrifft die Erfindung ein Verfahren zum Umverteilen von Produkten 10, welche von einer Produkte 10 produzierenden Produktionsstation P zu einer Verpackungsstation V zum Verpacken der Produkte 10 gefördert und mittels einer Speichereinrichtung 13 zwischen der Produktionsstation P und der Verpackungsstation V zwischengespeichert werden, wobei mittels Ablageebenen 1371 der Speichereinrichtung 13 die zwischengespeicherten Produkte 10 von einem Eingabeort 131 der Speichereinrichtung zu einem Abgabeort 133 der Speichereinrichtung 13 gefördert werden, wobei mehrere Ablageebenen 1371 beim Eingabeort und/oder beim Abgabeort vertikal übereinander angeordnet sind, wobei die Produkte von der Produktionsstation P mittels eines Hauptförderers 11 der Speichereinrichtung 13 am Eingabeort 131 den Ablageebenen 1371 zugeführt werden, wobei die zwischengespeicherten Produkte 10 beim Abgabeort 133 der Speichereinrichtung 13 von den Ablageebenen 1371 einem Austrageförderer 12 zugeführt und mittels diesem zur Verpackungsstation V gefördert werden, wobei eine Entkopplungseinrichtung 17 vorhanden ist, welche zwischen dem Hauptförderer 11 und dem Austrageförderer 12 angeordnet ist, wobei die Produkte 10 mittels des Hauptförderers 11 entweder der Entkopplungseinrichtung 17 oder der Speichereinrichtung durch Umverteilung zugeführt werden, wobei Produkte 10 mittels des Austrageförderers 12 entweder von der Entkopplungseinrichtung 17 oder von der Speichereinrichtung 13 übernommen und der Verpackungsmaschine V zugeführt werden, um eine lückenlose Förderung von Produkten 10 zur Verpackungsmaschine V zu gewährleisten.

Figur 2 illustriert eine Aufsicht auf die erfindungsgemässe Produkteumverteilvorrichtung 1. Das Bezugszeichen 11 zeigt den Hauptförderer, auf welchem zwei Reihen von Produkten 10 zu sehen sind. Der Austrageförderer 12, welcher quer zur Hauptförderrichtung 1111 angeordnet ist, übernimmt die Reihen von Produkten 10 aus der Speichereinheit 13 oder von der Entkopplungsvorrichung 17. Das Bezugszeichen 17 zeigt eine vereinfacht dargestellte Sicht auf die Entkopplungseinrichtung, auf welcher eine Reihe von Produkten 10 zwischengelagert ist. Das Bezugszeichen 12 zeigt den Austrageförderer, auf welchem gegenwärtig keine Produkte abgestellt sind. Die Entkopplungseinrichtung 17 wird in einem nächsten Schritt derart angetrieben, dass die zwischengespeicherte Produktereihe mittels den nicht dargestellten Mitnehmern und dem Entkopplungsförderer auf den Austrageförderer 12 geschoben werden. Des Weiteren sind zwei Lückenschliessförderer 18 dargestellt. Diese dienen dazu, zwischen einzelnen, aufeinander folgenden Reihen von Produkten entstehende Lücken, zu schliessen. Dies wird erreicht, indem die Lückenschliessförderer, meist endlos umlaufende Bänder, mindestens vorübergehend mit unterschiedlichen Geschwindigkeiten betrieben werden. Dies ist nötig, um der Verpackungsmaschine, welche den Lückenschliessbändern 18 nachfolgend angeordnet ist, Produkte in gleichbleibender Beabstandung zuzuführen. In Figur 2 sind zudem die beiden obenliegenden, parallel zueinander angeordneten Kettenräder 139a,139b dargestellt. Die untenliegenden beiden Kettenräder sind üblicherweise durch eine Antriebswelle miteinander verbunden. Mit Bezugszeichen 137 sind zwei Gondeln mit Tablaren bezeichnet, welche an den Ketten des Speichers angeordnet sind. Die Gondelketten können vor- und rücklaufend angetrieben werden.

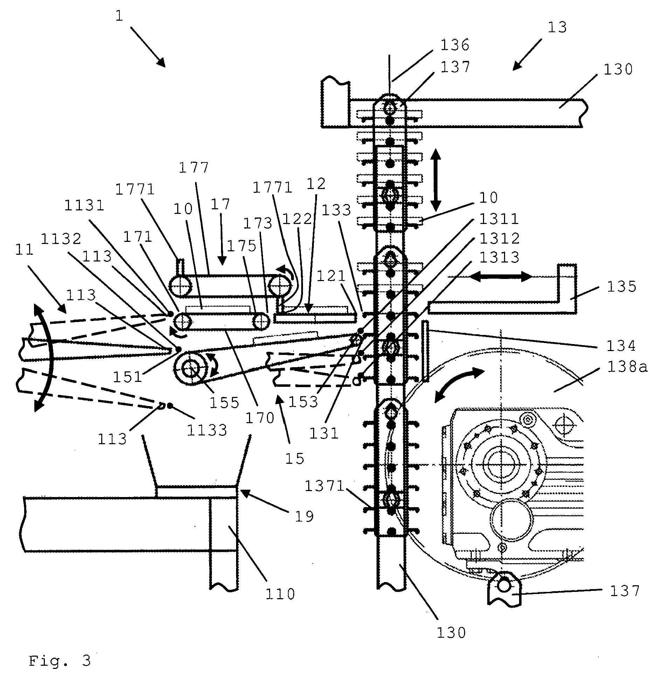

Figur 3 illustriert ein Detail der Produkteumverteilvorrichtung 1 aus Figur 1. Die Darstellung zeigt einen Teil des schwenkbaren Hauptförderers 11 mit Abgabeort 113. Die in gestrichelter Linie dargestellte Hauptförderer 11 zeigt zwei weitere Positionen, in welcher die Bandnase bzw. der Abgabeort 113 positionierbar ist. Der Hauptförderer 11 ist an der Rahmenkonstruktion 110 befestigt.

Mit Bezugszeichen 13 ist ausschnittsweise der Speicher dargestellt. An der Kette 136 sind Gondeln 137 mittels nicht dargestellten Mitnehmern oder Nocken befestigt. Die Gondeln können an der Rahmenkonstruktion 130 insbesondere in vertikaler Transportrichtung zwecks Stabilisierung geführt werden. Laufen die Gondeln um die Kettenräder, so sind sie üblicherweise frei schwingend angeordnet. Mit Bezugszeichen 134 ist ein Produktanschlag bzw. Anschlagmittel dargestellt. Dies dient dazu, die vom Beschickungsförderer 15 auf die entsprechende Ablagefläche bzw. Tablar 1371 beförderten Produkte 10 anzuhalten, damit diese nicht über das Tablar 1371 hinweg herunterfallen. In Figur 3 sind drei Gondeln 137 ersichtlich, welche vertikal übereinander angeordnet sind. Eine weitere Gondel 137 ist teilweise ersichtlich, wobei diese um das Kettenrad 138a umlaufend dargestellt ist. Die Produkte 10 werden mittels eines Schiebemittels 135 der Speichereinrichtung 13 auf den Austrageförderer 12 ausgeschoben, wobei der Abgabeort 133 der Speichereinrichtung 13 mit dem ersten Eingabeort 121 des Austrageförderers 12 verbunden ist. Der Eingabeort 131 und der Abgabeort 133 der Speichereinrichtung 13 sind übereinander angeordnet. Somit kann ein im Speicher 13 soeben abgelegtes Produkt 10 um einen Takt nach oben gefördert und mittels des Schiebers 135 sogleich wieder auf das Austrageband 12 ausgeschoben werden. Üblicherweise werden jedoch die Produkte nach dem Prinzip First-in Last-out aus dem Speicher 13 ausgeschoben. Die Speichereinrichtung 13 kann auch verstanden werden als Einrichtung mit mehreren übereinander angeordneten Ablageebenen 1371. Der Handhabung halber sind jeweils mehrere Ablageebenen oder Tablare zum Zwischenspeichern der Produkte 10 an Gondeln zusammengefasst und senkrecht zueinander gleichmässig beabstandet.

Anstelle eines Speichers mit umlaufenden Ketten, sind auch andere Speichersysteme einsetzbar. Dabei ist zu beachten, dass die Ablageflächen 1371 senkrecht an den Fördermitteln 12 und 15 vorbei transportierbar sind.

Zwischen dem Speicher 13 und dem Hauptförderer 11 sind die Einheiten Beschickungsförderer 15, Entkopplungseinrichtung 17, Austrageförderer 12 sowie Hilfsförderer 19 angeordnet. Jede dieser Einheiten ist an einer oder mehreren Tragkonstruktionen montiert, welche jedoch der Lesbarkeit halber hier nicht dargestellt sind. Die Speichereinrichtung 13 weist einen oder mehrere Eingabeorte 131 zur Aufnahme und einen Abgabeort 133 zur Abgabe der zwischengespeicherten Produkte 10 auf.

Auf dem Austrageförderer 12 ist ein Produkt 10 ersichtlich. Die beiden Längsseiten des Austrageförderers sind zugleich als Eingabeorte genutzt. Der Austrageförderer ist vorzugsweise als endloses Förderband realisiert, ausgestattet mit entsprechenden Antriebs- und Steuermitteln. Der Austrageförderer kann sowohl vor- wie auch rücklaufend betrieben werden. Das Förderband 12 weist einen ersten Eingabeort 121 auf, welcher dem Speicher 13 zugewandt ist. Es weist zudem einen zweiten Eingabeort 122 auf, welcher der Entkopplungseinrichtung 17 zugewandt ist und dem ersten Eingabeort gegenüberliegt. Der Austrageförderer 12 ist vorzugsweise starr auf einer bestimmten Höhe über der Montageebene angeordnet. Die Funktion des Austrageförderer besteht darin, die entweder vom Speicher 13 oder von der Entkopplungseinrichtung 17 übernommenen Produkte 10 in einer kontinuierlichen Reihe beim aus Figur 2 ersichtlichen Abgabeort 123 einem nachfolgenden Lückenschliessförderer 18 zu übergeben und somit einer Verpackungsmaschine zuzuführen.

Die Produkteumverteilvorrichtung 1 umfasst einen Beschickungsförderer 15 zum Fördern der Produkte 10 zwischen einem Eingabeort 151 und mindestens einem Abgabeort 153. Der Beschickungsförderer, vorzugsweise als endloser Bandförderer realisiert, kann um eine Schwenkachse 155, welche quer zu Hauptförderrichtung 1111 verläuft, in verschiedenen Positionen verschwenkt werden. Dazu sind entsprechende Antriebs- und Steuermittel, welche nicht dargestellt sind, vorgesehen. Die Schwenkung kann stufenlos oder in Stufen bzw. grösseren Schritten erfolgen. Der Abgabeort 153 wird bspw. auch als Ausgabeort, Bandnase oder Übergabekante bezeichnet. Die Bandnase kann bspw. in den in gestrichelten Linien dargestellten weiteren Übergabepositionen 1311,1312,1313 positioniert werden. Die Übergabepositionen sind feststehend, wenn die Übergabe von Produkten bei angehaltener Gondelkette 136 erfolgt. Die Übergabepositionen können jedoch auch in Bewegung sein, wenn die Gondelkette 136 durch das Kettenrad 138a,138b angetrieben ist. Im letzteren Fall muss die Bandnase 131 der Bewegung der Gondelkette bzw. des entsprechend leeren Tablars 1371 einer Gondel 137 nachgeführt werden. Dies wird mittels entsprechenden Regel- bzw. Steuerungsmitteln erreicht, welche den Antrieb regeln bzw. steuern.

Der Abgabeort 153 des Beschickungsförderers 15 wird zur Übergabe von Produkten an den Speicher 13 mit dem Eingabeort 131 der Speichereinrichtung 13 an einem der Übergabepositionen 1311,1312,1313 verbunden. Vorliegend ist die Bandnase 153 in der Übergabeposition 1311 dargestellt.

Des Weiteren werden Übergabepositionen auch für den Hauptförderer 11 definiert. Der Eingabeort 151 des Beschickungsförderers 15 ist mit dem Abgabeort 113 des Hauptförderers 11 in einer zweiten Übergabeposition 1132 verbunden. Weitere Übergabepositionen sind mit den Bezugszeichen 1131 sowie 1133 dargestellt. Der Hauptförderer 11 ist dabei in gestrichelter Linie dargestellt. Der Abgabeort 113 ist durch Schwenkung des Hauptförderers an einer von mehreren Übergabepositionen 1131,1132,... positionierbar.

Die Produkteumverteilvorrichtung 1 umfasst eine Entkopplungseinrichtung 17 mit einem Eingabeort 171 zur Aufnahme von Produkten 10 vom Hauptförderer 11 in der ersten Übergabeposition 1131. Diese erste Übergabeposition 1131 wird auch als Entkopplungsposition bezeichnet. Die Entkopplungseinrichtung 17 weist einen Abgabeort 153 zur Abgabe der Produkte auf. Dabei ist der Abgabeort 153 der Entkopplungseinrichtung mit dem zweiten Eingabeort 122 des Austrageförderers 12 verbunden. Mit Bezugszeichen 170 ist ein Entkopplungsförderer der Entkopplungseinrichtung 17 bezeichnet. Der Förderer 170 ist zum vorübergehenden Aufnehmen und Fördern von Produkten 10 zwischen dem Eingabeort 171 und dem Ausgabeort 171 ausgebildet. Die Entkopplungseinrichtung 17 umfasst Schiebemittel 177 mit mindestens einem Mitnehmer 1771, mittels welchem die auf dem Entkopplungsförderer 170 aufgenommenen Produkte 10 auf den Austragförderer ausschiebbar sind. Schiebemittel 177 und Förderer 170 werden üblicherweise ungefähr im Gleichtakt beschleunigt, um die Produkte möglichst schonend und rasch auf den Austrageförderer zu schieben.

Der Beschickungsförderer 15 der Produkteumverteilvorrichtung 1 ist im Bereich des Eingabeorts 151 um eine Schwenkachse 155 herum schwenkbar angeordnet. Dabei ist der Ausgabeort 153 des Beschickungsförderers 15 zur Umverteilung von Produkten 10 am Eingabeort 131 einer entsprechenden Ablageebene 1371 der Speichereinheit 13 in einer von mehreren Übergabepositionen 1311,1312,... positioniert. Diese Übergabepositionen 1311,1312,... werden auch als Beschickungspositionen bezeichnet.

Die Produkteumverteilvorrichtung 1 umfasst einen quer zur Hauptförderrichtung 1111 angeordneten Hilfsförderer 19 zum Fördern von Produkten 10, wobei der Abgabeort 113 des Hauptförderers 10 in einer weiteren Übergabeposition 1133 zur Umverteilung von Produkten an den Hilfsförderer 19 positioniert. Es sind in Hauptförderrichtung 1111 üblicherweise über dem Förderband des Hauptförderers 11 Sensormittel vorgesehen, insbesondere Metalldetektoren oder Videokamera, mittels welchen die Produkte auf Metallrückstände oder schlechte Positionierung oder Defekte etc. geprüft werden können. Die entsprechenden Sensorsignale werden bspw. mittels einer speicherprogrammierbaren Steuerung bzw. Regelung oder ähnlichen Mitteln ausgewertet und entsprechende Steuerungsdaten generiert. Basierend auf den Steuerungsdaten wird ermöglicht, qualitativ ungenügende Produkte oder Reihen von Produkten auf den Hilfsförderer auszuwerfen, indem der Abgabeort 113 des Hauptförderers in die entsprechende Übergabeposition 1133 geschwenkt wird. Diese Übergabeposition 1133 wird auch als Hilfsposition bezeichnet. Der Hilfsförderer 19 kann bspw. auch als Abfallbehältnis oder kippbare Abwurfplatte realisiert sein.

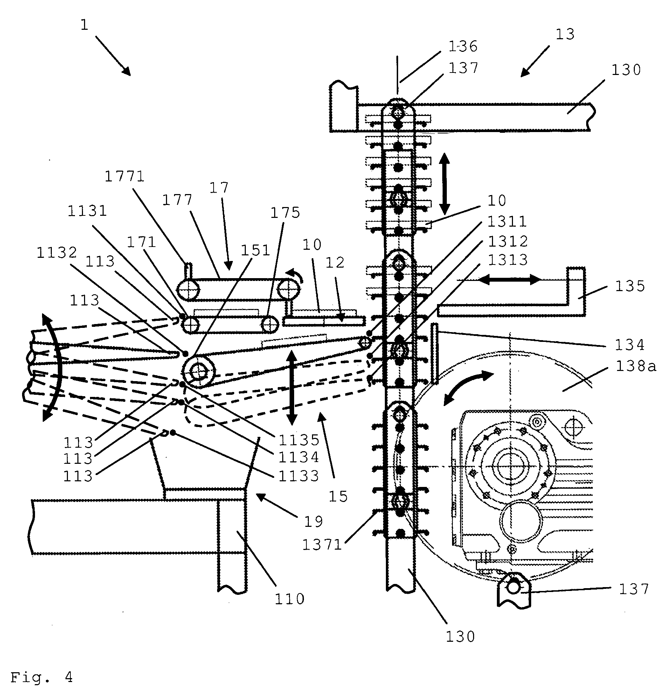

Figur 4 illustriert eine Ausführungsvariante der erfindungsgemässen Produkteumverteilvorrichtung 1. Der Beschickungsförderer 15 ist höhenverstellbar ausgebildet und kann mehreren Übergabepositionen 1311,1312,... nachgeführt werden. Die Übergabepositionen können feststehend oder beweglich ausgebildet sein. Eingabeort 151 und Ausgabeort 153 des Beschickungsförderers 15 werden vorzugsweise in gleichem Mass in der Höhe diesen Übergabepositionen nachgeführt. Die entsprechenden Antriebsmittel sind in Figur 4 nicht dargestellt. Es können elektrisch steuerbare Linearmotoren, hydraulische Zylinder o.ä. verwendet werden. Der Ausgabeort 153 des Beschickungsförderers 15 wird zur Umverteilung von Produkten 10 an den Eingabeort 131 einer entsprechenden Ablageebene 1371 der Speichereinheit 13 in einer der mehreren Übergabepositionen 1311,1312,... positioniert. Dabei wird der Eingabeort 151 des Beschickungsförderers 15 entsprechend in einer von mehreren Übergabepositionen 1132,1134,... mit dem Ausgabeort 113 des Hauptförderers 11 positioniert.

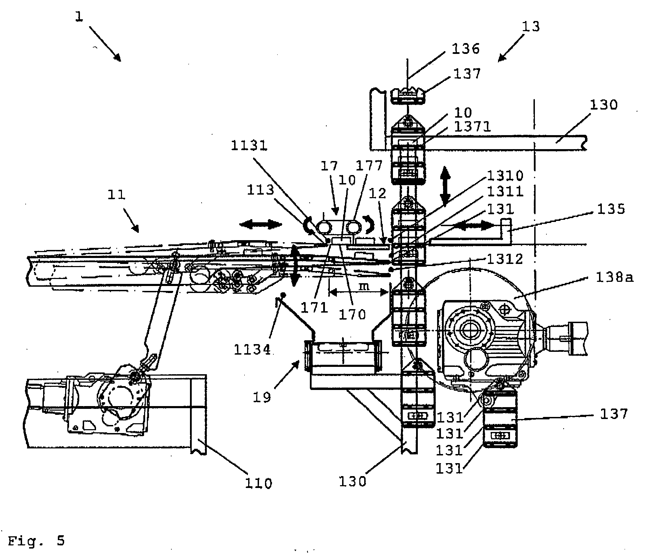

Figur 5 illustriert eine Ausführungsvariante der erfindungsgemässen Produkteumverteilvorrichtung 1, welche bspw. bei der Herstellung von kleinen Produkten 10 bei kleineren Herstellungs-Taktraten zum Einsatz kommt. Kleine Produkte sind bspw. Biscuits oder kleine quadratische Schokoladetafeln. Durch die geringen Abmessungen der Produkte 10 können die Bevorratungsplatte 170 sowie das Austrageband 12 verhältnismässig schmal ausgebildet sein. Durch die schmalere Konstruktion der Bevorratungs- und Fördermittel 170,12 sowie die geringere Zahl der Bewegungen der Bandnase des Hauptförderers 11 pro Zeiteinheit ermöglicht daher, dass mittels des Hauptförderers 11 die Rückzugsbewegung entweder die Gondeln 137 oder der Bevorratungsplatz 170 mit Produkten 10 beschickt wird. Der Beschickungsförderer 15 (Fig. 3) ist Bestandteil des Hauptförderers 11 bzw. der Hauptförderer wird um die Funktion des Beschickungsförderers 15 ergänzt. Der Hauptförderer 11 der Produkteumverteilvorrichtung 1 ist somit mit dem Beschickungsförderer 15 dauerhaft verbunden. Diesfalls liegt bei dauerhafter Verbindung eine mechanische Kopplung der Förderer vor. Der Hauptförderer 11 kann aber, unter Verzicht auf den Beschickungsförderer 15, auch derart ausgebildet sein, dass er die Eigenschaften der beiden Förderer 11,15 erfüllt. Im Wesentlichen muss der Hauptförderer 11 somit längenverstellbar und schwenkbar sein, so dass die Bandnase bzw. der Abgabeort des 113 des Hauptförderers 11 in allen Übergabepositionen 1311,1312,...;1331,1332,... positioniert werden kann. Um die Bandnase 113 des Hauptförderers 11 sowohl bei der Entkopplungseinrichtung 17 als auch den Eingabeorten des Speichers 13 positionieren zu können, ist der schwenkbare Hauptförderer 11 zudem längenverstellbar ausgebildet. Nach wie vor können mittels der beweglichen Bandnase 113 des Hauptförderers 11 minderwertige Reihen von Produkten 10 auf das Fördermittel 19 ausgeschleust werden. Der Hauptförderer 11 ist schwenkbar und längenverstellbar ausgebildet, um in allen erforderlichen Übergabepositionen positionierbar zu sein. Dabei muss der Hauptförderer im Wesentlichen um den Abstand m verlängerbar ausgebildet sein. Der Abstand m bestimmt beträgt mindestens die Distanz zwischen dem Eingabeort 171 und einem der mit den Bezugszeichen 1311,1312,1313,... bezeichneten Übergabepositionen.

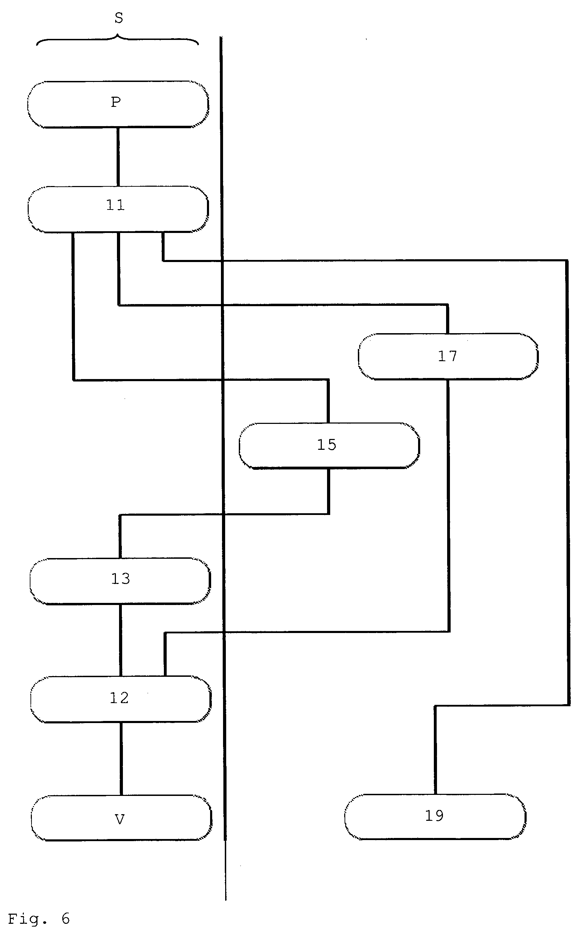

Figur 6 illustriert ein Blockdiagramm der erfindungsgemässen Produkteumverteilvorrichtung 1. Die links von der senkrechten durchgezogenen Linie dargestellten Blöcke P,11,12,13,V sind im Stand der Technik S bekannt. Die Blöcke 15,17,19 rechts der Linie wirken mit den bekannten Einheiten gemäss den Verbindungslinien zwischen den Blöcken zusammen.

### Bezugszeichenlegende

- 1: Produktumverteilvorrichtung

- 10: Produkt(e)

- 11: Hauptförderer
- 110: Rahmenkonstruktion
- 111: Eingabeort, Aufnahmeort
- 1111: Hauptförderrichtung, Förderrichtung
- 113: Abgabeort, Ausgabeort, Bandnase
- 1131,1132,...: Übergabeort, Übergabeposition
- 115: Achse, Schwenkachse

- 12: Austrageförderer
- 121: erster Eingabeort, erster Aufnahmeort
- 122: zweiter Eingabeort, zweiter Aufnahmeort
- 123: Abgabeort, Ausgabeort

- 13: Speichereinrichtung
- 130: Rahmenkonstruktion
- 131: Eingabeort, Aufnahmeort
- 1331,1332,...: Übergabeort, Übergabeposition, Beschickungsposition
- 133: Abgabeort, Ausgabeort
- 134: Anschlagmittel
- 135: Schieber, Schiebemittel
- 136: Kette, Gondelkette, Gurt, Band
- 137: Gondel, Transportgestell
- 1371: Ablageebene, Speicherebene, Tablar
- 138a,b: Kettenrad, Antriebsrad
- 139a,b: Kettenrad, Antriebsrad
- 15: Beschickungsförderer
- 151: Eingabeort, Aufnahmeort
- 153: Abgabeort
- 155: Achse

- 17: Entkopplungsvorrichtung, Entkopplungseinheit
- 170: Entkopplungsförderer, Bevorratungsplatz
- 171: Eingabeort, Aufnahmeort
- 173: Abgabeort, Ausgabeort
- 177: Schiebemittel
- 1771: Mitnehmer, Anschlagmittel

- 18: Lückenschliessförderer, Lückenschliessband

- 19: Hilfsförderer, Ausschleusband

- B: Breite
- L: Länge
- m: Abstand, Distanz
- P: Produktionsstation, -maschine
- S: Stand der Technik
- V: Verpackungsstation, -maschine

## Patentansprüche

1. Produkteumverteilvorrichtung (1), mit einem Hauptförderer (11) zum Fördern von Produkten (10) in einer Hauptförderrichtung (1111) zwischen einem Eingabeort (111) und einem Abgabeort (113), mit einer Speichereinrichtung (13), welche mehrere übereinander angeordnete Ablageebenen (1371) zur Aufnahme der Produkte (10) an einem Eingabeort (131) und zur Abgabe der zwischengespeicherten Produkte (10) an einem Abgabeort (133) aufweist, wobei der Eingabeort (131) der Speichereinrichtung (13) in einer von mehreren Übergabepositionen (1311-1313) positionierbar ist und wobei die Produkte (10) am Abgabeort (133) mittels eines Schiebemittels (135) der Speichereinrichtung (13) ausschiebbar sind,
wobei ein Austrageförderer (12) zur Aufnahme der ausgeschobenen Produkte (10) an einem ersten Eingabeort (121) und zur Abgabe der Produkte (10) an einem Abgabeort (123) des Austrageförderers (12) vorhanden ist, wobei der Abgabeort (133) der Speichereinrichtung (13) mit dem ersten Eingabeort (121) des Austrageförderers (12) verbunden ist,
wobei die Produkteumverteilvorrichtung (1) einen Beschickungsförderer (15) zum Fördern der Produkte (10) zwischen einem Eingabeort (151) und einem Abgabeort (153) umfasst, und wobei der Abgabeort (153) des Beschickungsförderers (15) in einer der mehreren Übergabepositionen (1311-1313) mit dem Eingabeort (131) der Speichereinrichtung (13) zum Zwischenspeichern der Produkte (10) auf einer entsprechenden Ablageebene (1371) verbindbar ist, **dadurch gekennzeichnet,**
**dass** der Hauptförderer (11) schwenkbar ausgebildet ist, wobei der Abgabeort (113) des Hauptförderers (11) in mehrere Übergabepositionen (1131-1135) schwenkbar ist, und wobei der Abgabeort (113) des Hauptförderers (11) in mindestens einer (1132,1134,1135) der mehreren Übergabepositionen (1131-1135) des Hauptförderers (11) mit dem Eingabeort (151) des Beschickungsförderers (15) verbindbar ist,
**dass** die Produkteumverteilvorrichtung (1) eine Entkopplungseinrichtung (17) mit einem Eingabeort (171) zur Aufnahme von Produkten vom Hauptförderer (11) in einer ersten Übergabeposition (1131) des Hauptförderers (11) und einem Abgabeort (173) zur Abgabe der Produkte umfasst, wobei der Abgabeort (173) der Entkopplungseinrichtung (17) mit einem zweiten Eingabeort (122) des Austrageförderers (12) verbunden ist.

2. Produkteumverteilvorrichtung (1) gemäss Anspruch 1, **dadurch gekennzeichnet, dass** der Beschickungsförderer (15) im Bereich von dessen Eingabeort (151) um eine Schwenkachse (155) herum schwenkbar ist, wobei der Abgabeort (153) des Beschickungsförderers (15) zur Umverteilung der Produkte (10) beim Eingabeort (131) einer entsprechenden Ablageebene (1371) der Speichereinheit (13) in einer der Übergabepositionen (1311,1312,...) positioniert ist.

3. Produkreumverteilvorrichtung (1) gemäss einem der Ansprüche 1 und 2, **dadurch gekennzeichnet, dass** der Beschickungsförderer (15) höhenverstellbar ausgebildet ist und dessen Abgabeort (153) zur Umverteilung von Produkten (10) an den Eingabeort (131) einer entsprechenden Ablageebene (1371) der Speichereinheit (13) in einer der Übergabepositionen (1311,1312,...) positioniert ist, wobei der Eingabeort (151) des Beschickungsförderers (15) entsprechend in einer der Übergabepositionen (1132,1134,...) mit dem Abgabeort (113) des Hauptförderers (11) positioniert ist.

4. Produkteumverteilvorrichtung (1) gemäss einem der Ansprüche 1 bis 3, **dadurch gekennzeichnet, dass** der schwenkbare Hauptförderer (11) längenverstellbar ausgebildet ist, wobei der Abgabeort (113) des Hauptförderers (11) in mehreren Übergabepositionen (1131,1132,...) positionierbar ist.

5. Produkteumverteilvorrichtung (1), mit einem Hauptförderer (11) zum Fördern von Produkten (10) in einer Hauptförderrichtung (1111) zwischen einem Eingabeort (111) und einem Abgabeort (113), mit einer Speichereinrichtung (13), welche mehrere übereinander angeordnete Ablageebenen (1371) zur Aufnahme der Produkte (10) an einem Eingabeort (131) und zur Abgabe der zwischengespeicherten Produkte (10) an einem Abgabeort (133) aufweist, wobei der Eingabeort (131) der Speichereinrichtung (13) in einer von mehreren Übergabepositionen (1311,1312) positionierbar ist und wobei die Produkte (10) am Abgabeort (133) mittels eines Schiebemittels (135) der Speichereinrichtung (13) ausschiebbar sind,
wobei ein Austrageförderer (12) zur Aufnahme der ausgeschobenen Produkte (10) an einem ersten Eingabeort (121) und zur Abgabe der Produkte (10) an einem Abgabeort (123) des Austrageförderers (12) vorhanden ist, wobei der Abgabeort (133) der Speichereinrichtung (13) mit dem ersten Eingabeort (121) des Austrageförderers (12) verbunden ist,
und wobei der Hauptförderer (11) schwenkbar ausgebildet ist, wobei der Abgabeort (113) des Hauptförderers (11) in mehrere Übergabepositionen (1131,1134,1311,1312) schwenkbar ist,
wobei der Abgabeort (113) des Hauptförderers (11) in einer (1311,1312) der mehreren Übergabepositionen (1131,1134,1311,1312) des Hauptförderers (11) mit dem Eingabeort (131) der Speichereinrichtung (13) zum Zwischenspeichern der Produkte (10) auf einer entsprechenden Ablageebene (1371) verbindbar ist, **dadurch gekennzeichnet,**
**dass** die Produkteumverteilvorrichtung (1) eine Entkopplungseinrichtung (17) mit einem Eingabeort (171) zur Aufnahme von Produkten vom Hauptförderer (11) in einer ersten Übergabeposition (1131) und einem Abgabeort (173) zur Abgabe der Produkte umfasst, wobei der Abgabeort (173) der Entkopplungseinrichtung (17) mit einem zweiten Eingabeort (122) des Austrageförderers (12) verbunden ist,
**dass** der schwenkbare Hauptförderer (11) zum Verbinden von dessen Abgabeort (113) mit dem Eingabeort (171) der Entkopplungseinrichtung (17) in einer (1131) der mehreren Übergabepositionen (1131,1134,1311,1312) des Hauptförderers (11) längenverstellbar ausgebildet ist.

6. Produkteumverteilvorrichtung (1) gemäss einem der Ansprüche 1 bis 5, **dadurch gekennzeichnet, dass** der Eingabeort (131) und der Abgabeort (133) der Speichereinrichtung (13) übereinander angeordnet sind.

7. Produkteumverteilvorrichtung (1) gemäss einem der Ansprüche 1 bis 6, **dadurch gekennzeichnet, dass** die Entkopplungseinrichtung (17) einen Entkopplungsförderer (170) zum vorübergehenden Aufnehmen und Fördern von Produkten (10) zwischen dessen Eingabeort (171) und dessen Abgabeort (173) umfasst, dass die Entkopplungseinrichtung (17) Schiebemittel (177) mit mindestens einem Mitnehmer (1771) umfasst, mittels welchem die auf dem Entkopplungsförderer (170) aufgenommenen Produkte (10) auf den Austragförderer ausschiebbar sind.

8. Produkteumverteilvorrichtung (1) gemäss einem der Ansprüche 1 bis 7, **dadurch gekennzeichnet, dass** die Produkteumverteilvorrichtung (1) einen quer zur Hauptförderrichtung (1111) angeordneten Hilfsförderer (19) zum Fördern von Produkten (10) umfasst, dass der Abgabeort (113) des Hauptförderers (11) in einer weiteren Übergabeposition (1133) zur Umverteilung von Produkten an den Hilfsförderer (19) positioniert ist.

9. Verfahren zum Umordnen von Produkten (P) mittels einer Produkteumverteilvorrichtung (1) gemäss einem der Ansprüche 1 bis 8, **dadurch gekennzeichnet, dass** die Produkte (10) mittels des Hauptförderers (11) in Hauptförderrichtung (1111) gefördert werden, dass zur Umverteilung der Produkte (10) auf die Entkopplungseinrichtung (17) der Abgabeort (113) des Hauptförderers (11) in der ersten Übergabeposition (1131) positioniert wird, wobei nach erfolgter Umverteilung die Produkte (10) mittels der Entkopplungseinrichtung (17) auf den Austrageförderer (12) umverteilt werden.

10. verfahren gemäss Anspruch 9, **dadurch gekennzeichnet, dass** die Produkte (10) mittels des Hauptförderers (11) oder mittels des Beschickungsförderers (170) in die Speichereinheit (13) eingespeichert werden.

11. Verfahren gemäss einem der Ansprüche 9 und 10, **dadurch gekennzeichnet, dass** alternativ oder zusätzlich der Abgabeort (113) des Hauptförderers (11) zum zuführen der Produkte (10) in die Speichereinheit (13) entsprechend in einer der Übergabepositionen (1311,1312,...) positioniert wird.

12. Verfahren gemäss einem der Ansprüche 9 bis 11, **dadurch gekennzeichnet, dass** mittels des Schiebemittels (135) der Speichereinheit (13) Produkte (10) auf den Austrageförderer (12) ausgeschoben werden, wobei während des Ausschiebens der Produkte (10) aus der Speichereinheit (13) auf dem Beschickungsförderer (15) oder dem Hauptförderer (11) vorhandene Produkte (10) alternativ oder zusätzlich der Speichereinheit (13) mittels dem Beschickungsförderer (15) oder dem Hauptförderer (11) zugeführt werden.

## Claims

1. A product redistribution device (1) having a main conveyor (11) for conveying products (10) in a main conveying direction (1111) between an input location (111) and a set-down location (113), having a storage device (13) which has a plurality of set-down levels (1371) arranged one above the other for accepting the products (10) at an input location (131) and for setting down the temporarily stored products (10) at a set-down location (133), wherein the input location (131) of the storage device (13) can be positioned in one of a plurality of transfer positions (1311-1313), and wherein the products (10) can be pushed out at the set-down location (133) by means of a pushing means (135) of the storage device (13),
wherein a discharge conveyor (12) is provided for accepting the pushed-out products (10) at a first input location (121) and for the setting-down of the products (10) at a set-down location (123) of the discharge conveyor (12), wherein the set-down location (133) of the storage device (13) is connected to the first input location (121) of the discharge conveyor (12),
wherein the product distribution device (1) comprises a feed conveyor (15) for conveying the products (10) between an input location (151) and a set-down location (153), and wherein the set-down location (153) of the feed conveyor (15) can be connected to the input location (131) of the storage device (13) in one of the plurality of transfer positions (1311-1313) for the purpose of temporarily storing the products (10) on a corresponding set-down level (1371), **characterized in that** the main conveyor (11) is designed to be pivotable, wherein the set-down location (113) of the main conveyor (11) can be pivoted into a plurality of transfer positions (1131-1135), and wherein the set-down location (113) of the main conveyor (11) can be connected to the input location (151) of the feed conveyor (15) in at least one (1132, 1134, 1135) of the plurality of transfer positions (1131-1135) of the main conveyor (11),
that the product distribution device (1) comprises a decoupling device (17) having an input location (171) for accepting products from the main conveyor (11) in a first transfer position (1131) of the main conveyor (11) and a set-down location (173) for the setting-down of the products, wherein the set-down location (173) of the decoupling device (17) is connected to a second input location (122) of the discharge conveyor (12).

2. The product redistribution device (1) as claimed in claim 1, **characterized in that** the feed conveyor (15) can be pivoted in the region of its input location (151) about a pivot axis (155), wherein the set-down location (153) of the feed conveyor (15) can be positioned in one of the transfer positions (1311, 1312, ...) for the purpose of redistributing the products (10) at the input location (131) of a corresponding set-down level (1371) of the storage unit (13).

3. The product redistribution device (1) as claimed in one of claims 1 and 2, **characterized in that** the feed conveyor (15) is designed to be adjustable in height and its set-down location (153) is positioned in one of the transfer positions (1311, 1312, ...) for the purpose of redistributing products (10) at the input location (131) of a corresponding set-down level (1371) of the storage unit (13), wherein the input location (151) of the feed conveyor (15) is correspondingly positioned in one of the transfer positions (1132, 1134, ...) with the set-down location (113) of the main conveyor (11).

4. The product redistribution device (1) as claimed in one of claims 1 to 3, **characterized in that** the pivotable main conveyor (11) is designed to be adjustable in length, wherein the set-down location (113) of the main conveyor (11) can be positioned in a plurality of transfer positions (1131, 1132, ...).

5. A product redistribution device (1) having a main conveyor (11) for conveying products (10) in a main conveying direction (1111) between an input location (111) and a set-down location (113), having a storage device (13) which has a plurality of set-down levels (1371) arranged one above the other for accepting the products (10) at an input location (131) and for setting down the temporarily stored products (10) at a set-down location (133), wherein the input location (131) of the storage device (13) can be positioned in one of a plurality of transfer positions (1311, 1312), and wherein the products (10) can be pushed out at the set-down location (133) by means of a pushing means (135) of the storage device (13),
wherein a discharge conveyor (12) is provided for accepting the pushed-out products (10) at a first input location (121) and for the setting-down of the products (10) at a set-down location (123) of the discharge conveyor (12), wherein the set-down location (133) of the storage device (13) is connected to the first input location (121) of the discharge conveyor (12),
and wherein the main conveyor (11) is designed to be pivotable, wherein the set-down location (113) of the main conveyor (11) can be pivoted into a plurality of transfer positions (1131, 1134, 1311, 1312),
wherein the set-down location (113) of the main conveyor (11) can be connected to the input location (131) of the storage device (13) in one (1311, 1312) of the plurality of transfer positions (1131, 1134, 1311, 1312) of the main conveyor (11) for the purpose of temporarily storing the products (10) on a corresponding set-down level (1371), **characterized in that**
the product distribution device (1) comprises a decoupling device (17) having an input location (171) for accepting products from the main conveyor (11) in a first transfer position (1131) and a set-down location (173) for the setting-down of the products, wherein the set-down location (173) of the decoupling device (17) is connected to a second input location (122) of the discharge conveyor (12),
that the pivotable main conveyor (11) is designed to be adjustable in length for the purpose of connecting its set-down location (113) to the input location (171) of the decoupling device (17) in one (1131) of the plurality of transfer positions (1131, 1134, 1311, 1312) of the main conveyor (11).

6. The product redistribution device (1) as claimed in one of claims 1 to 5, **characterized in that** the input location (131) and the set-down location (133) of the storage device (13) are arranged one above the other.

7. The product redistribution device (1) as claimed in one of claims 1 to 6, **characterized in that** the decoupling device (17) comprises a decoupling conveyor (170) for temporarily accommodating and conveying products (10) between its input location (171) and its set-down location (173), that the decoupling device (17) comprises pushing means (177) with at least one driving dog (1771), by means of which the products (10) accepted on the decoupling conveyor (170) can be pushed out onto the discharge conveyor.

8. The product redistribution device (1) as claimed in one of claims 1 to 7, **characterized in that** the product redistribution device (1) comprises an auxiliary conveyor (19) at right angles to the main conveying direction (1111) for the purpose of conveying products (10), that the set-down location (113) of the main conveyor (11) is positioned in a further transfer position (1133) for the purpose of redistributing products to the auxiliary conveyor (19).

9. A method for rearranging products (P) by means of a product redistribution device (1) as claimed in one of claims 1 to 8, **characterized in that** the products (10) are conveyed in the main conveying direction (1111) by means of the main conveyor (11), that the set-down location (113) of the main conveyor (11) is positioned in the first transfer position (1131) for the purpose of redistributing the products (10) onto the decoupling device (17), wherein, when redistribution is complete, the products (10) are redistributed onto the discharge conveyor (12) by means of the decoupling device (17).

10. The method as claimed in claim 9, **characterized in that** the products (10) are taken into the storage unit (13) for storage by means of the main conveyor (11) or by means of the feed conveyor (170).

11. The method as claimed in one of claims 9 and 10, **characterized in that,** alternatively or additionally, the set-down location (113) of the main conveyor (11) is positioned accordingly in one of the transfer positions (1311, 1312, ...) for the purpose of feeding the products (10) into the storage unit (13).

12. The method as claimed in one of claims 9 to 11, **characterized in that** products (10) are pushed out onto the discharge conveyor (12) by means of the pushing means (135) of the storage unit (13), wherein, alternatively or additionally, existing products on the feed conveyor (15) or the main conveyor (11) are fed to the storage unit (13) by means of the feed conveyor (15) or the main conveyor (11) while the products (10) are being pushed out of the storage unit (13).

## Revendications

1. Installation de redistribution de produits (1), comportant un transporteur principal (11) destiné à transporter des produits (10) dans une direction de transport principale (1111) entre un point de chargement (111) et un point de déchargement (113), et un dispositif d'accumulation (13) qui présente plusieurs plans de déchargement (1371) disposés les uns au-dessus des autres pour recevoir les produits (10) à un point de chargement (131) et pour décharger les produits (10) accumulés temporairement à un point de déchargement (133), le point de chargement (131) du dispositif d'accumulation (13) étant positionable dans l'une de plusieurs positions de transfert (1311-1313), et les produits (10) pouvant être éjectés au point de déchargement (133) à l'aide d'un moyen coulissant (135) du dispositif d'accumulation (13) ;
un transporteur d'enlèvement (12) destiné à recevoir des produits (10) éjectés à un premier point de chargement (121) et à décharger les produits (10) à un point de déchargement (123) du transporteur d'enlèvement (12), le point de déchargement (133) du dispositif d'accumulation (13) étant relié au premier point de chargement (121) du transporteur d'enlèvement (12) ;
l'installation de redistribution de produits (1) comprenant un transporteur d'alimentation (15) destiné à transporter des produits (10) entre un point de chargement (151) et un point de déchargement (153), et le point de déchargement (153) du transporteur d'alimentation (15) pouvant être relié, dans l'une des plusieurs positions de transfert (1311-1313), au point de chargement (131) du dispositif d'accumulation (13) pour accumuler temporairement les produits (10) sur un plan de déchargement correspondant (131), **caractérisé par le fait**
**que** le transporteur principal (11) est réalisé pivotant, le point de déchargement (113) du transporteur principal (11) pouvant être placé par pivotement dans plusieurs positions de transfert (1131-1135) et le point de déchargement (113) du transporteur principal (11) pouvant être relié au point de chargement (151) du transporteur d'alimentation (15) dans au moins l'une (1132, 1134, 1135) des plusieurs positions de transfert (1131-1135) du transporteur principal (11) ;
**que** l'installation de redistribution de produits (1) comprend un dispositif de découplage (17) qui présente un point de chargement (171) pour recevoir des produits du transporteur principal (11) dans une première position de transfert (1131) du transporteur principal (11) et un point de déchargement (173) pour décharger les produits, le point de déchargement (173) du dispositif de découplage (17) étant relié à un deuxième point de chargement (122) du transporteur d'enlèvement (12).

2. Installation de redistribution de produits (1) selon la revendication 1, **caractérisée par le fait que** le transporteur d'alimentation (15) est apte à pivoter autour d'un axe de pivotement (155) dans la région de son point de chargement (151), le point de déchargement (153) du transporteur d'alimentation (15) étant positionné, pour la redistribution des produits (10), au point de chargement (131) d'un plan de déchargement correspondant (1371) de l'unité d'accumulation (13) dans l'une des positions de transfert (1311, 1312,...).

3. Installation de redistribution de produits (1) selon l'une des revendications 1 et 2, **caractérisée par le fait que** le transporteur d'alimentation (15) est réalisé réglable en hauteur et que son point de déchargement (153) est positionné pour la redistribution des produits (10) au point de chargement (131) d'un plan de déchargement correspondant (1371) de l'unité d'accumulation (13), dans l'une des positions de transfert (1311, 1312, ...), le point de chargement (151) du transporteur d'alimentation (15) étant positionné de façon correspondante dans l'une des positions de transfert (1132, 1134,...) avec le point de déchargement (113) du transporteur principal (11).

4. Installation de redistribution de produits (1) selon l'une des revendications 1 à 3, **caractérisée par le fait que** le transporteur principal pivotant (11) est réalisé réglable en longueur, le point de déchargement (113) du transporteur principal (11) pouvant être positionné dans plusieurs positions de transfert (1131, 1132,...).

5. Installation de redistribution de produits (1), comportant un transporteur principal (11) destiné à transporter des produits (10) dans une direction de transport principale (1111) entre un point de chargement (111) et un point de déchargement (113), un dispositif d'accumulation (13) qui présente plusieurs plans de déchargement (1371) disposés les uns au-dessus des autres pour recevoir les produits (10) à un point de chargement (131), et pour décharger les produits (10) accumulés temporairement à un point de déchargement (133), le point de chargement (131) du dispositif d'accumulation (13) pouvant être positionné dans l'une de plusieurs positions de transfert (1311, 1312), et les produits (10) pouvant être éjectés au point de déchargement (133), au moyen d'un moyen coulissant (135) du dispositif d'accumulation (13) ;
un transporteur d'enlèvement (12) destiné à recevoir les produits (10) éjectés à un premier point de déchargement (121) et à décharger les produits (10) à un point de déchargement (123) du transporteur d'enlèvement (12) étant présent, le point de déchargement (133) du dispositif d'accumulation (13) étant relié au premier point de chargement (121) du transporteur d'enlèvement (12) ;
et le transporteur principal (11) étant monté pivotant, le point de déchargement (113) du transporteur principal (11) pouvant être placé par pivotement dans plusieurs positions de transfert (1131, 1134, 1311, 1312) ;
le point de déchargement (113) du transporteur principal (11) pouvant être relié, dans l'une (1311, 1312) des plusieurs positions de transfert (1131, 1134, 1311, 1312) du transporteur principal (11), au point de chargement (131) du dispositif d'accumulation (13) pour l'accumulation temporaire des produits (10) sur un plan de déchargement correspondant (1371), **caractérisé par le fait**
**que** l'installation de redistribution de produits (1) comprend un dispositif de découplage (17) qui comporte un point de chargement (171) pour recevoir des produits du transporteur principal (11) dans une première position de transfert (1131) et un point de déchargement (173) pour le déchargement des produits, le point de déchargement (173) du dispositif de découplage (17) étant relié à un deuxième point de chargement (122) du transporteur d'enlèvement (12) ;
**que** le transporteur principal pivotant (11) est réalisé réglable en longueur pour relier son point de déchargement (113) au point de chargement (171) du dispositif de découplage (17) dans l'une (1131) des plusieurs positions de transfert (1131, 1134, 1311, 1312) du transporteur principal (11).

6. Installation de redistribution de produits (1) selon l'une des revendications 1 à 5, **caractérisée par le fait que** le point de chargement (131) et le point de déchargement (133) du dispositif d'accumulation (13) sont disposés l'un au-dessus de l'autre.

7. Installation de redistribution de produits (1) selon l'une des revendications 1 à 6, **caractérisée par le fait que** le dispositif de découplage (17) comprend un transporteur de découplage (170) destiné à la réception temporaire et au transport de produits (10) entre son point de chargement (171) et son point de déchargement (173), que le dispositif de découplage (17) comprend des moyens coulissants (177) comportant au moins un entraîneur (1771) au moyen duquel les produits (10) reçus sur le transporteur de découplage (170) peuvent être éjectés sur le transporteur d'enlèvement.

8. Installation de redistribution de produits (1) selon l'une des revendications 1 à 7, **caractérisée par le fait que** l'installation de redistribution de produits (1) comprend un transporteur auxiliaire (19) disposé transversalement à la direction de transport principale (1111), destiné à transporter des produits (10), que le point de déchargement (113) du transporteur principal (11) est positionné dans une position de transfert supplémentaire (1133) pour la redistribution de produits au transporteur auxiliaire (19).

9. Procédé pour réarranger des produits (P) au moyen d'une installation de redistribution de produits (1) selon l'une des revendications 1 à 8, **caractérisé par le fait que** les produits (10) sont transportés au moyen du transporteur principal (11) dans une direction de transport principale (1111), que, pour la redistribution des produits (10) sur le dispositif de découplage (17), le point de déchargement (113) du transporteur principal (11) est positionné dans la première position de transfert (1131), où, après l'exécution de la redistribution, les produits (10) sont redistribués sur le transporteur d'enlèvement (12) au moyen du dispositif de découplage (17).

10. Procédé selon la revendication 9, **caractérisé par le fait que** les produits (10) sont accumulées dans l'unité d'accumulation (13) au moyen du transporteur principal (11) ou au moyen du transporteur d'alimentation (170).

11. Procédé selon l'une des revendications 9 et 10, **caractérisé par le fait qu'**en variante ou en supplément, le point de déchargement (113) du transporteur principal (11) destiné à introduire les produits (10) dans l'unité d'accumulation (13) est positionné de façon correspondante dans l'une des positions de transfert (1311, 1312,...).

12. Procédé selon l'une des revendications 9 à 11, **caractérisé par le fait qu'**à l'aide du moyen coulissant (135) de l'unité d'accumulation (13), les produits (10) sont éjectés sur le transporteur d'enlèvement (12), où, pendant l'éjection des produits (10) de l'unité d'accumulation (13), les produits (10) présents sur le transporteur d'alimentation (15) ou sur le transporteur principal (11) sont acheminés en variante ou en supplément à l'unité d'accumulation au moyen du transporteur d'alimentation (15) ou du transporteur principal (11).
